# EUROPEAN PATENT APPLICATION

(11) **EP 4 704 229 A1**
(43) Date of publication of application: **04.03.2026**
(21) Application number: 25194305.6
(22) Date of filing: 06.08.2025
(51) Int. Cl.: H01M 50/15, H01M 50/159, H01M 50/176, H01M 50/188, H01M 50/19, H01M 50/55, H01M 50/593, H01M 50/553

(54) **CAP ASSEMBLY AND SECONDARY BATTERY INCLUDING SAME**

(30) Priority: 28.08.2024 KR 20240116239
(71) Applicant: SAMSUNG SDI CO., LTD., Yongin-si, Gyeonggi-do 17084 (KR)
(72) Inventor: PARK, Yerim, 17084 Yongin-Si Gyeonggi-do (KR)
(74) Representative: Gulde & Partner

(57) **Abstract**

A cap assembly including: a cap plate coupled to a case having an open top portion, the cap plate having a first terminal through-hole and a second terminal through-hole; a first terminal and a second terminal located in the first terminal through-hole and the second terminal through-hole, respectively, and electrically connected to an electrode assembly accommodated in the case; and at least one insulating member electrically insulating the cap plate from at least one of the first terminal or the second terminal.

## Description

### BACKGROUND

### 1. Field

Aspects of embodiments of the present disclosure relate to a cap assembly, and a secondary battery including the cap assembly.

### 2. Description of the Related Art

A secondary battery is a rechargeable battery that may be charged and discharged repeatedly. Such secondary batteries are mainly used in various applications, such as electronics (e.g., smartphones, laptops, and tablets), electric vehicles, photovoltaics, and emergency power supplies. For example, lithium-ion batteries are used in a variety of electronics and electric vehicles, due to their high energy density and high charge and discharge efficiency.

Secondary batteries may be categorized into cylindrical secondary batteries, prismatic secondary batteries, and pouch secondary batteries, depending on the shape of the case thereof. Prismatic secondary cells may have a structure in which an electrode assembly is accommodated within a prismatic metal can. An electrode assembly is inserted in the square metal can, which is sealed by welding a cap plate.

The above information disclosed in this Background section is for enhancement of understanding of the background of the present disclosure, and therefore, it may contain information that does not constitute related (or prior) art.

### SUMMARY

Embodiments of the present disclosure may be directed to a cap assembly and a secondary battery including the cap assembly, in which a performance may be improved.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, a cap assembly includes: a cap plate coupled to a case having an open top portion, the cap plate having a first terminal through-hole and a second terminal through-hole; a first terminal and a second terminal located in the first terminal through-hole and the second terminal through-hole, respectively, and electrically connected to an electrode assembly accommodated in the case ; and at least one insulating member electrically insulating the cap plate from at least one of the first terminal or the second terminal.

In some embodiments, the cap assembly may further include an insulating plate under the cap plate.

In some embodiments, the cap assembly may further include a conductive member spacing the cap plate from one of the first terminal or the second terminal.

In some embodiments, the first terminal may be coupled to the insulating member, and may be located in the first terminal through-hole. The second terminal may be coupled to the conductive member, and may be located in the second terminal through-hole.

In some embodiments, the insulating member may have a size corresponding to a size of the first terminal or the second terminal. A bottom surface of the first terminal or the second terminal may be seated on a top surface of the insulating member, and may be located in the first terminal through-hole or the second terminal through-hole.

In some embodiments, the insulating member may have a size corresponding to a size of an inner surface of the first terminal through-hole or the second terminal through-hole, and an inside of the insulating member may be perforated.

In some embodiments, the first terminal or the second terminal may penetrate the insulating member.

In some embodiments, an inner surface of the first terminal through-hole or the second terminal through-hole may have a sloped surface to support the insulating member.

In some embodiments, an outer surface of the insulating member may be sloped to correspond to the sloped surface.

In some embodiments, an inner surface of the first terminal through-hole or the second terminal through-hole may include a first stepped portion to support the insulating member.

In some embodiments, an outer surface of the insulating member may have a second stepped portion corresponding to the first stepped portion.

In some embodiments, at least one of the first terminal or the second terminal may have an engraved recess for coupling to the insulating plate.

In some embodiments, the insulating plate may include an embossed protrusion corresponding to the engraved recess of at least one of the first terminal or the second terminal.

According to one or more embodiments of the present disclosure, a secondary battery includes: an electrode assembly including a first electrode, a second electrode, and a separator; a case having an open top portion to accommodate the electrode assembly; and a cap assembly covering the open top portion of the case. The cap assembly includes: a cap plate coupled to the case, and having a first terminal through-hole and a second terminal through-hole; a first terminal and a second terminal located in the first terminal through-hole and the second terminal through-hole, respectively, and electrically connected to the electrode assembly; an insulating member spacing the first terminal from the cap plate; and a conductive member spacing the second terminal from the cap plate.

In some embodiments, the secondary battery may further include an insulating plate under the cap plate.

In some embodiments, the first terminal may be coupled to the insulating member, and may be located in the first terminal through-hole. The second terminal may be coupled to the conductive member, and may be located in the second terminal through-hole.

In some embodiments, the insulating member may have a size corresponding to a size of the first terminal. A bottom surface of the first terminal may be seated on a top surface of the insulating member, and may be located in the first terminal through-hole.

In some embodiments, the insulating member may have a size corresponding to a size of an inner surface of the first terminal through-hole, an inside of the insulating member may be perforated, and the first terminal may be located in the insulating member.

In some embodiments, the first terminal may include an engraved recess for coupling to the insulating plate.

In some embodiments, the insulating plate may include an embossed protrusion corresponding to the engraved recess of the first terminal.

According to some embodiments of the present disclosure, by disposing the terminals to be inserted into the cap plate in a penetrating manner, the terminals may be embedded in the cap plate, thereby reducing a current path, and thus, reducing a resistance.

According to some embodiments of the present disclosure, the terminals may not protrude above the cap plate, and may be positioned to be in line with or slightly protrude from the cap plate. Accordingly, the sizes of the case, the internal electrodes, and the like may be increased by an amount of space that would have been previously occupied by the terminals, thereby increasing the capacity of the battery.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing an example of a battery cell according to some embodiments;
FIG. 2 illustrates a cross-sectional view showing the battery cell according to some embodiments;
FIG. 3 illustrates an exploded perspective view showing a cap assembly of the battery cell according to some embodiments;
FIG. 4 illustrates portions of the cap assembly that is assembled from the exploded view of FIG. 3;
FIGS. 5A and 5B illustrate exploded perspective views showing a cap assembly according to some other embodiments;
FIG. 6 illustrates portions of the cap assembly that is assembled from the exploded view of FIG. 5A or FIG. 5B according to an embodiment of the present disclosure;
FIG. 7 illustrates portions of the cap assembly that is assembled from the exploded view of FIG. 5A or FIG. 5B according to another embodiment of the present disclosure; and
FIG. 8 illustrates portions of the cap assembly that is assembled from the exploded view of FIG. 5A or FIG. 5B according to another embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

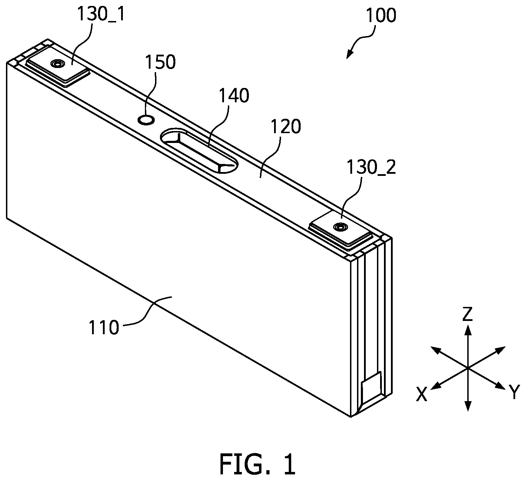

FIG. 1 illustrates a perspective view showing an example of a battery cell according to some embodiments.

Referring to FIG. 1, a battery cell 100 may include at least one wound or stacked electrode assembly including a positive electrode, a negative electrode, and a separator, which may be an insulator, provided between the positive electrode and the negative electrode. The battery cell 100 may further include a case 110 accommodating the electrode assembly therein, and a cap plate 120 connected to (e.g., coupled to or attached to) an open end of the case 110. The battery cell 100 illustrated in FIG. 1 may be a secondary battery.

Each of the positive electrode and the negative electrode may include a current collector made of a thin metal foil having a coated portion on which an active material is coated and an uncoated portion on which an active material is not coated. The positive electrode and the negative electrode are wound after interposing the separator, which is an insulator, therebetween. However, the present disclosure is not limited thereto, and the electrode assembly may have a structure in which a positive electrode and a negative electrode, each made of a plurality of sheets, are alternately stacked with a separator interposed therebetween.

The case 110 may form the overall outer appearance of the secondary battery 100 and may be made of a conductive metal, such as aluminum, aluminum alloy, or nickel-plated steel. In addition, the case 110 may provide a space in which the electrode assembly is accommodated. In FIG. 1, the case 110 is shown as a prismatic case and the battery cell 100 is shown as a prismatic battery cell, but the present disclosure is not limited thereto. The battery cell 100 may have any suitable shape, such as a square shape, a cylindrical shape, or a pouch shape.

The cap plate 120 may be connected to (e.g., coupled to or attached to) an open end of the case 110 to seal the case 110. The case 110 and the cap plate 120 may include (e.g., may be formed from) a conductive material. According to an embodiment, a top end of the case 110 may be open, and the cap plate 120 may seal the open top end of the case 110.

A positive terminal 130_1 electrically connected to a positive electrode and a negative terminal 130_2 electrically connected to a negative electrode may be connected to (e.g., coupled to or attached to) the cap plate 120. For example, the positive and negative terminals 130_1 and 130_2 may be provided to protrude outward through the cap plate 120. In an embodiment, the positive and negative terminals 130_1 and 130_2 may be positioned at (e.g., in or on) the same line (e.g., in the same plane) as that of the cap plate 120, or may be structures that protrude less than those of comparative positive and negative terminals.

According to an embodiment, a vent 140 may be provided on at least a first surface of the battery cell 100 (e.g., the top surface of the battery cell 100, such as on the cap plate 120 as shown in the example of FIG. 1). The vent 140 may be opened if (e.g., when) an internal pressure equal to or greater than a threshold pressure (e.g., a predetermined threshold pressure) is detected in the battery cell 100.

In this case, the threshold pressure may be different (e.g., may be set differently or may vary) depending on the application, material, purpose, and/or the like of the battery. For example, for a battery having a short charge-discharge cycle in use, where the internal pressure of the case 110 maintains a higher average pressure compared to other applications, a relatively higher threshold pressure may be used (e.g., may be set). In another example, a relatively higher threshold pressure may be used (e.g., may be set) for a battery that is manufactured from a material and/or design that has relatively high heat and/or pressure resistance. On the other hand, a relatively lower threshold pressure may be used (e.g., may be set) for a battery manufactured from a material and/or design that has relatively low heat and/or pressure resistance. As another example, the vent 140 may be open if (e.g., when) the internal temperature exceeds a threshold temperature (e.g., a predetermined threshold temperature). As such, the vent 140 may prevent or substantially prevent the battery cell 100 from exploding, or may prevent or substantially prevent a chain exothermic reaction of other battery cells arranged around the battery cell 100.

In an embodiment, the cap plate 120 may include an electrolyte inlet 150. For example, the electrolyte inlet 150 may be an aperture formed in the cap plate 120 for injecting an electrolyte into the case 110 after the cap plate 120 is connected to (e.g., coupled to or attached to) the open end of the case 110, and thus, the inside of the case 110 is sealed. The electrolyte inlet 150 may be sealed with a sealing member after the electrolyte is injected.

The battery cell 100 may include (e.g., may be) a lithium battery cell, a sodium battery cell, or the like. However, the present disclosure is not limited thereto, and the battery cell 100 may include any suitable kind of cell capable of repeatedly providing electricity by charging and discharging. In an embodiment, if (e.g., when) the battery cell 100 is a lithium battery cell, the battery cell 100 may be used in an electric vehicle (EV) due to superior life characteristics and a high rate capability thereof. For example, the battery cell 100 may be used in hybrid vehicles, such as a plug-in hybrid electric vehicle (PHEV). Lithium battery cells may also be used in applications using or requiring large amounts of energy storage. For example, lithium battery cells may be used in electric bicycles, power tools, and the like.

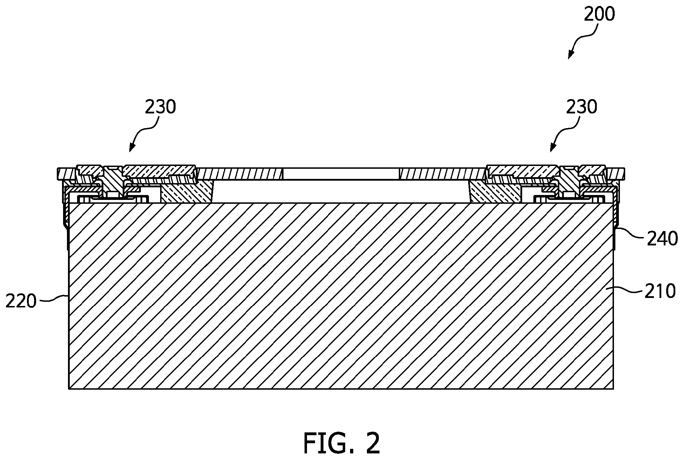

FIG. 2 illustrates a cross-sectional view showing the battery cell according to some embodiments.

Referring to FIG. 2, in an embodiment, an electrode assembly 210 of a battery cell 200 may be manufactured by winding a positive electrode (e.g., an anode), a negative electrode (e.g., a cathode), and a separator, which may be an insulator, provided between the positive electrode and the negative electrode. In another embodiment of the present disclosure, the electrode assembly 210 may include a plurality of sheets of positive and negative electrodes that are alternately stacked on opposite sides of the separator, and the shape or number of electrode assemblies 210 may not be particularly limited.

The electrode assembly 210 may be provided by winding or stacking a laminate including a first electrode plate (not shown), a separator (not shown), and a second electrode plate (not shown) each formed as a thin plate or film. In a case where the electrode assembly 210 is a wound laminate, the axis of the winding thereof may be parallel to the longitudinal direction of the case. In addition, the electrode assembly 210 may be a stack type instead of being a wound type, but the shape of the electrode assembly 210 of the present disclosure is not limited thereto. In addition, the electrode assembly 210 may be a Z stack electrode assembly in which a positive electrode plate and a negative electrode plate are provided on opposite sides of the separator bent as a Z stack. In addition, one or more electrode assemblies 210 may be stacked so that the long sides thereof are adjacent to each other so as to be received in the case. The present disclosure is not intended to limit the number of electrode assemblies 210. In the electrode assembly 210, the first electrode plate may act as a positive electrode, and the second electrode plate may act as a negative electrode. The reverse is also possible.

The first electrode plate may be formed by applying a first electrode active material, such as graphite or carbon, to a first electrode collector plate formed of a metal foil of, for example, copper (Cu), a Cu alloy, nickel (Ni), or a Ni alloy, and may include a first electrode tab (e.g., a first uncoated portion) which is a region to which the first electrode active material is not applied. The first electrode tab may be a path for current flow between the first electrode plate and the first subplate assembly. In some examples, the first electrode tab may be formed by previously cutting the first electrode plate so that the first electrode tab protrudes from a first side in a case where the first electrode plate is fabricated, and may protrude further from the first side than the separator without additional cutting.

The second electrode plate is formed by applying a second electrode active material, such as a transition metal oxide, to a second electrode collector plate formed of a metal foil of, for example, Al or an Al alloy, and may include a second electrode tab (e.g., a second uncoated portion) which is a region to which the second electrode active material is not applied. The second electrode tab may be a path for current flow between the second electrode plate and the second subplate assembly. In some examples, the second electrode tab may be formed by previously cutting the second electrode plate so that the second electrode tab protrudes from a second side in a case where the second electrode plate is fabricated, and may protrude further from the second side than the separator without additional cutting.

A case 220 of the battery cell 200 may provide a space in which the electrode assembly 210 is accommodated. The case 220 may have any suitable shape, such as an angular shape, a cylindrical shape, or a pouch shape. The electrode assembly 210 of the battery cell 200 may be inserted into, and accommodated in, the case 220 in any suitable shape or number.

A cap assembly 230 may include at least one of a positive terminal electrically connected to a positive electrode and/or a negative terminal electrically connected to a negative electrode, and may include the cap plate 120 described above with reference to FIG. 1. The cap assembly 230 may be connected to (e.g., coupled to or attached to) an open end of the case 220 to seal the case 220. The cap assembly 230 may include one or more electrode terminals configured to be connected to the electrode assembly.

A subplate assembly 240 may be connected to (e.g., coupled to or attached to) a bottom end of the cap assembly 230. The subplate assembly 240 may be connected to (e.g., coupled to or attached to) one side of the case 220, and may be electrically connected to an electrode (e.g., a positive electrode or a negative electrode) of the electrode assembly 210. The subplate assembly 240 may include a subplate and a current collector. With the bottom surface of the subplate in contact with the electrode assembly 210, the electrode assembly 210 may be electrically connected to the positive terminal or the negative terminal included in the cap assembly 230.

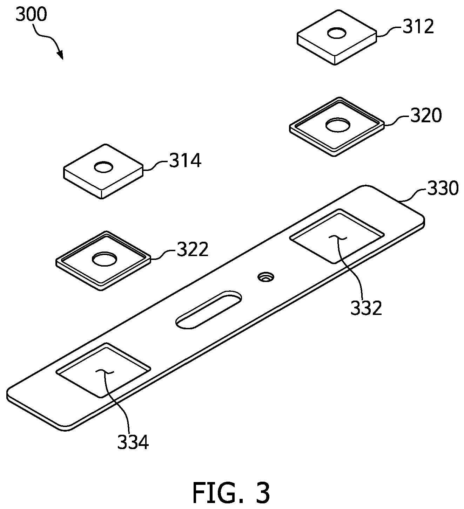

FIG. 3 illustrates an exploded perspective view showing a cap assembly 300 of the battery cell according to some embodiments.

A cap assembly 300 may include terminals 312 and 314, an insulating member 320, a conductive member 322, and a cap plate 330. The cap assembly 300 may be connected to (e.g., coupled to or attached to) a case.

The terminals 312 and 314 may be electrically connected to an electrode assembly housed in the case. The terminals 312 and 314 may include a first terminal 312 and a second terminal 314. The terminals 312 and 314 may include a positive terminal electrically connected to a positive electrode, and a negative terminal electrically connected to a negative electrode. For example, the first terminal 312 may be a negative terminal and the second terminal 314 may be a positive terminal, or vice versa.

The insulating member 320 and the conductive member 322 may be components that space apart (e.g., that separate) the terminals 312 and 314 from the cap plate 330. The insulating member 320 may be a component that electrically insulates the terminals 312 and 314 from the cap plate 330. The first terminal 312 and the second terminal 314 may be connected to (e.g., coupled to or attached to) the insulating member 320 and/or the conductive member 322, respectively. The insulating member 320 may be included in (e.g., may be included underneath) at least one of the first terminal 312 or the second terminal 314. In some embodiments, the conductive member 322 may be omitted as needed or desired, or may be applied to one (e.g., only one) of the first terminal 312 or the second terminal 314.

In an embodiment, the top surfaces of the insulating member 320 and/or the conductive member 322 may be provided in suitable sizes corresponding to the first terminal 312 and the second terminal 314. The bottom surface of the first terminal 312 or the second terminal 314 may be seated on the top surface of the insulating member 320 and/or the conductive member 322, respectively. For example, the first terminal 312 may be seated on the top surface of the insulating member 320, and the second terminal 314 may be seated on the top surface of the conductive member 322.

The cap plate 330 may seal an open area of the case, and may include (e.g., may be formed from) the same or substantially the same material as that of the case. The cap plate 330 may be welded to the case. In addition, the cap plate 330 may be connected to (e.g., coupled to or attached to) the terminals 312 and 314. The cap plate 330 may include terminal through-holes 332 and 334 at positions where the terminals 312 and 314 are to be disposed. The insulating member 320 and/or the conductive member 322 connected to (e.g., coupled to or attached to) the first terminal 312 and the second terminal 314 may be inserted into the terminal through-holes 332 and 334. In an embodiment, the cap plate 330 may include a first terminal through-hole 332 and a second terminal through-hole 334. The inner surface sizes of the first terminal through-hole 332 and the second terminal through-hole 334 may correspond to the outer surface sizes of the insulating member 320 and the conductive member 322. The insulating member 320 connected to (e.g., coupled to or attached to) the first terminal 312 may be inserted into the first terminal through-hole 332. The conductive member 322 connected to (e.g., coupled to or attached to) the second terminal 314 may be inserted in the second terminal through-hole 334.

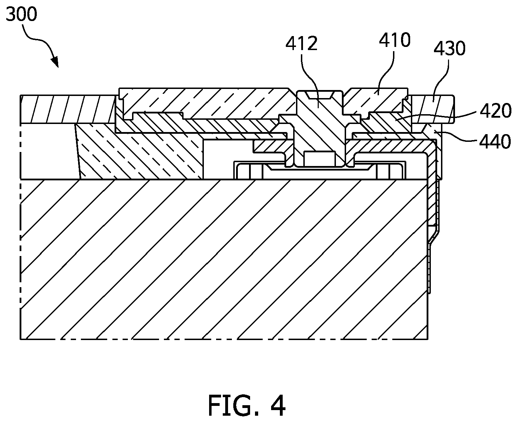

FIG. 4 illustrates portions of the cap assembly that is assembled from the exploded view of FIG. 3.

A terminal 410 may be seated on the top surface of the insulating member 420. The terminal 410 may include a rivet terminal 412 that is inserted into a hole provided in (e.g., penetrating) the terminal 410. The insulating member 420 and the terminal 410 may be connected to each other (e.g., may be joined to each other) by the rivet terminal 412, which may be riveted or welded to connect (e.g., to couple or to attach) the insulating member 420 and the terminal 410 to each other.

The coupled terminal 410 and the insulating member 420 may be inserted into a terminal through-hole of a cap plate 430. The terminal 410 may be embedded in the cap plate 430. The terminal 410 may be recessed to reduce an amount of the terminal protruding from the top portion of the cap plate 430. The embedded terminal 410 may be in line with (e.g., may be co-planar with), or may slightly protrude from, the cap plate 430. Because the cap plate 430 according to some embodiments of the present disclosure may have a structure in which the terminal 410 may be embedded, the size of the case and the size of the internal electrodes therein may be increased by an amount of space that may have been previously occupied by the terminal.

So that the terminal 410 may be seated on the insulating member 420 (or the conductive member), a stepped portion may be provided on an outer surface of the terminal 410, and a corresponding stepped portion may also be provided on an inner surface of the insulating member 420. Because the stepped portion on the outer surface of the terminal 410 and the stepped portion on the inner surface of the insulating member 420 may be engage with each other, the terminal 410 may be firmly seated on the insulating member 420.

An insulating plate 440 may be disposed under the cap plate 430. The insulation plate 440 may be provided in a suitable size corresponding to the size of the cap plate 430. The insulating member 420 and the terminal 410 that are connected to (e.g., coupled to or attached to) each other and positioned in the terminal through-hole of the cap plate 430 may be supported by the insulating plate 440 disposed under the cap plate 430.

In an embodiment, the conductive member may be provided in a shape that is the same as or substantially the same as (or similar to) that of the insulating member 420 described above, and thus, redundant description thereof may not be repeated.

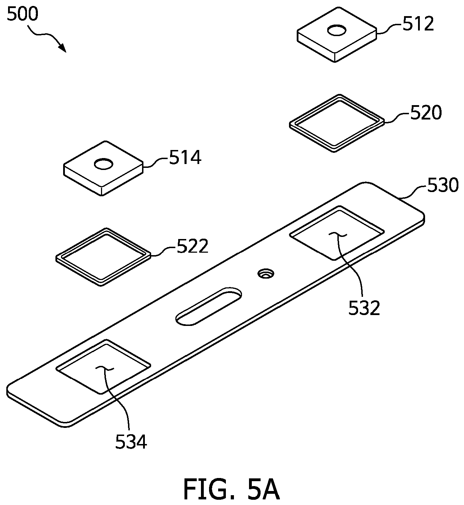

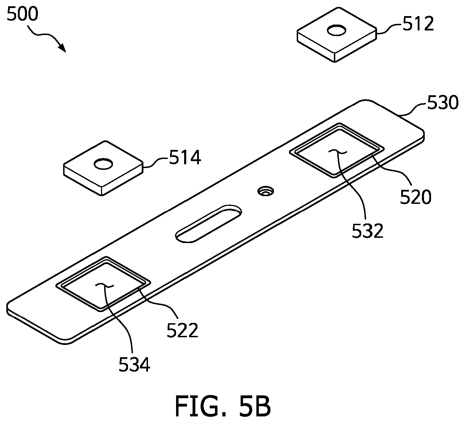

FIGS. 5A and 5B illustrate exploded perspective views showing a cap assembly according to some other embodiments. FIG. 5A illustrates a perspective view showing a configuration in which an insulating member is detached from a cap plate, and FIG. 5B illustrates a perspective view showing a configuration in which the insulating member is attached to the cap plate.

Referring to FIGS. 5A and 5B, a cap assembly 500 may include terminals 512 and 514, an insulating member 520, a conductive member 522, and a cap plate 530. The cap assembly 500 may be connected to (e.g., coupled to or attached to) a case.

The terminals 512 and 514 may be electrically connected to an electrode assembly accommodated in the case. The terminals 512 and 514 may include a first terminal 512 and a second terminal 514. The terminals 512 and 514 may include a positive terminal electrically connected to a positive electrode, and a negative terminal electrically connected to a negative electrode. For example, the first terminal 512 may be a negative terminal and the second terminal 514 may be a positive terminal, or vice versa.

The insulating member 520 and the conductive member 522 may be components for spacing apart (e.g., separating) the terminals 512 and 514 and the cap plate 530 from each other. The insulating member 520 may be a component for electrically isolating the terminals 512 and 514 and the cap plate 530 from each other. The first terminal 512 and the second terminal 514 may be connected to (e.g., coupled to or attached to) the insulating member 520 and/or the conductive member 522, respectively. The insulating member 520 may be included in at least one of the first terminal 512 or the second terminal 514. In some embodiments, the conductive member 522 may be omitted as needed or desired, or may be applied to one (e.g., only one) of the first terminal 512 or the second terminal 514.

In an embodiment, the inside of the insulating member 520 and/or the conductive member 522 may be perforated. Because the insulating member 520 and/or the conductive member 522 are components for spacing apart (e.g., separating) the cap plate 530 and the terminals 512 and 514 from each other, the insulating member 520 and/or the conductive member 522 may cover (e.g., may only cover) a boundary portion between the cap plate 530 and the terminals 512 and 514. In other words, the insulating member 520 and/or the conductive member 522 may have a ring shape that is perforated, except for at a circumferential region having a shape corresponding to the outer circumference of the terminals 512 and 514 and the inner circumference of terminal through-holes 532 and 534 of the cap plate 530.

The inner surface size of the insulating member 520 and/or the conductive member 522 may correspond to the outer surface size of the terminals 512 and 514. The terminals 512 and 514 may be inserted into the insulating member 520 and/or the conductive member 522, respectively. For example, the first terminal 512 may be inserted into the insulating member 520 in a penetrating manner, and the second terminal 512 may be inserted into the conductive member in a penetrating manner.

The cap plate 530 seals the open area of the case, and may include (e.g., may be formed from) the same material as that of the case. The cap plate 530 may be connected to (e.g., coupled to or attached to) the open end of the case to seal the case. The cap plate 530 may be welded to the case. In addition, the cap plate 530 may be connected to (e.g., coupled to or attached to) the terminals 512 and 514, with the intervening insulating member 520 and/or conductive member 522 therebetween. The cap plate 530 may include the terminal through-holes 532 and 534 at positions where the terminals 512 and 514 are to be disposed. The terminal through-holes 532 and 534 may include an insulating member 520 and/or the conductive members 522 connected to (e.g., coupled to or attached to) the first terminal 512 or the second terminal 514. The cap plate 530 may include the first terminal through-hole 532 and the second terminal through-hole 534. In an embodiment, the inner surface size of the first terminal through-hole 532 and the second terminal through-hole 534 may correspond to the outer surface size of the insulating member 520 and/or the conductive member 522. The insulating member 520 connected to (e.g., coupled to or attached to) the first terminal 512 may be inserted into the first terminal through-hole 532, and the conductive member 522 connected to (e.g., coupled to or attached to) the second terminal 514 may be inserted into the second terminal through-hole 534. FIG. 5B illustrates the coupling of the inner circumferential surface of the terminal through-holes 532 and 531 of the cap plate 530 and the corresponding outer circumferential surfaces of the insulating member 520 and the conductive member 522 with each other.

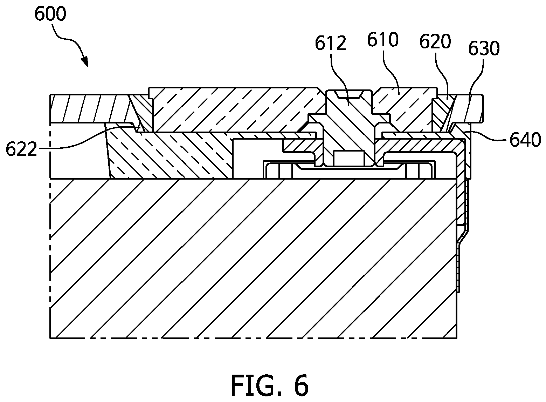

FIG. 6 illustrates portions of the cap assembly that is assembled from the exploded view of FIG. 5A or FIG. 5B according to an embodiment of the present disclosure.

The terminal 610 may be inserted into the insulating member 620 in a penetrating manner. The terminal 610 and the insulating member 620 may be inserted into a terminal through-hole in the cap plate 630. The terminal 610 may be embedded in the cap plate 630. Because the terminal 610 is embedded, a portion of the terminal protruding above the cap plate 630 may be reduced. The recessed terminal 610 may be configured to be in line with (e.g., may be co-planar with), or may slightly protrude from, the cap plate 630. Because the cap plate 630 according to some embodiments of the present disclosure may have a structure in which the terminal 610 may be embedded, the size of the case and the size of the internal electrodes therein may be increased by an amount of space that may have been previously occupied by the terminal.

Referring to FIG. 6, a sloped surface 622 may be provided on the inner surface of the terminal through-hole of the cap plate 630. The sloped surface 622 may be provided on the inner surface of the terminal through-holes of the cap plate 630 to support the insulating member 620. The outer surface of the insulating member 620 may have a slope corresponding to the sloped surface 622 on the inner surface of the terminal through-hole of the cap plate 630. The sloped surface 622 of the inner surface of the terminal through-hole and the slope of the outer surface of the insulating member 620 may engage with each other. The cap plate 630 and the insulating member 620 may be supported on each other. The cap plate 630 and the insulating member 620 may be coupled to each other by the sloped surface 622.

So that the terminal 610 may be seated on the insulating member 620 (or the conductive member), a stepped portion may be provided on the outer surface of the terminal 610, and a corresponding stepped portion may be provided on the inner surface of the insulating member 620. Due to the stepped portion on the outer surface of the terminal 610, the terminal 610 may have a shape in which the upper portion thereof is wider than the lower portion thereof with respect to the stepped portion. As the stepped portion on the outer surface of the terminal 610 and the stepped portion on the inner surface of the insulating member 620 engage with each other, the terminal 610 may be firmly seated on the insulating member 620.

An insulating plate 640 may be disposed under the cap plate 630. The insulating plate 640 may be provided in a suitable size corresponding to the size of the cap plate 630. The insulating member 620 and the terminal 610 that are connected to (e.g., coupled to or attached to) each other and positioned in the through hole of the cap plate 630 may be supported by the insulating plate 640 disposed under the cap plate 630.

The terminal 610 may include a rivet terminal 612 that is inserted into a hole provided in the terminal 610. The insulating plate 640 may be disposed under the cap plate 630. The insulation plate 640 and the terminal 610 may be connected to (e.g., coupled to or attached to) each other by the rivet terminal 612 by riveting, latching or welding the insulation plate 640 and the terminal 610 to each other.

In an embodiment, the conductive member may be provided in a shape that is the same as or substantially the same as (or similar to) that of the insulating member 620 described above, and thus, redundant description thereof may not be repeated.

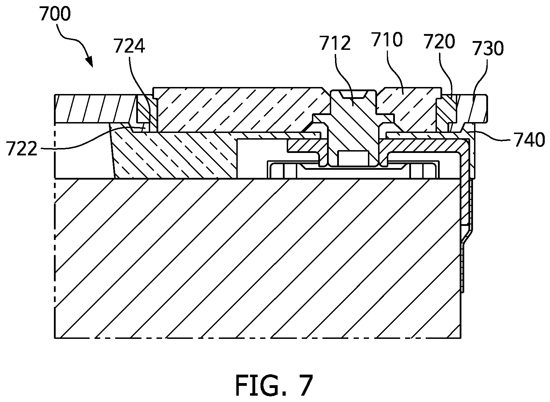

FIG. 7 illustrates portions of the cap assembly that is assembled from the exploded view of FIG. 5A or FIG. 5B according to another embodiment of the present disclosure.

The terminal 710 may be inserted into the insulating member 720 in a penetrating manner. The terminal 710 and the insulating member 720 may be inserted into a terminal through-hole of the cap plate 730. The terminal 710 may be embedded in the cap plate 730. Because the terminal 710 is embedded, a portion of the terminal protruding above the cap plate 730 may be reduced. The recessed terminal 710 may be in line with (e.g., may be co-planar with), or may slightly protrude from, the cap plate 730. Because the cap plate 730 according to some embodiments of the present disclosure may have a structure in which the terminal 710 may be embedded, the size of the case and the size of the internal electrodes therein may be increased by an amount of space that may have been previously occupied by the terminal.

Referring to FIG. 7, a first stepped portion 722 may be provided on the inner surface of the terminal through-hole of the cap plate 730. The first stepped portion 722 for supporting the insulating member 720 may be provided on the inner surface of the terminal through-hole of the cap plate 730. An outer surface of the insulating member 720 may include a second stepped portion 724 corresponding to the first stepped portion 722 on the inner surface of the terminal through-hole of the cap plate 730. The first stepped portion 722 on the inner surface of the terminal through-hole and the second stepped portion 724 on the outer surface of the insulating member 720 may engage with each other. The cap plate 730 and the insulating member 720 may be coupled to each other by the stepped portions 722 and 724.

So that the terminal 710 may be seated on the insulating member 720 (or a conductive member), a stepped portion may be provided on the outer surface of the terminal 710, and a corresponding stepped portion may be provided on the inner surface of the insulating member 720. Due to the stepped portion on the outer surface of the terminal 710, the terminal 710 may have a shape in which the upper part thereof is wider than the lower part thereof with respect to the stepped portion.

An insulating plate 740 may be disposed under the cap plate 730. The insulating plate 740 may be provided in a suitable size corresponding to the size of the cap plate 730. The insulating member 720 and the terminal 710 connected to (e.g., coupled to or attached to) each other and positioned in the terminal through-hole of the cap plate 730 may be supported by the insulating plate 740 disposed under the cap plate 730.

The terminal 710 may include a rivet terminal 712 that is inserted into a hole provided in the terminal 710. The insulating plate 740 may be disposed under the cap plate 730. The insulating plate 740 and the terminal 710 may be coupled to each other by the rivet terminal 712 by riveting, latching or welding the insulating plate 740 and the terminal 710 together.

In an embodiment, the conductive member may be provided in a shape that is the same as or substantially the same as (or similar to) the insulating member 720 described above, and thus, redundant description thereof may not be repeated.

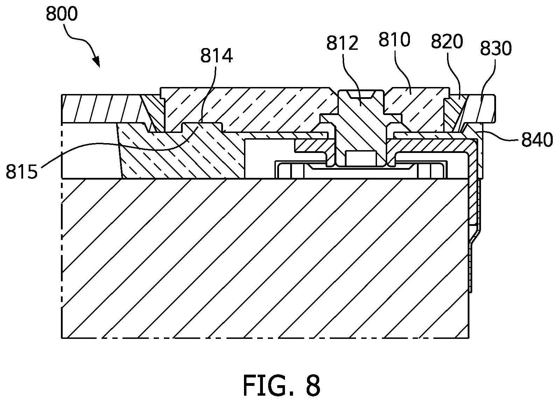

FIG. 8 illustrates portions of the cap assembly that is assembled from the exploded view of FIG. 5A or FIG. 5B according to another embodiment of the present disclosure.

The terminal 810 may be inserted into the insulating member 820 in a penetrating manner. The terminal 810 and the insulating member 820 may be inserted into a terminal through-hole in the cap plate 830. The terminal 810 may be embedded in the cap plate 830. Because the terminal 810 is embedded, a portion of the terminal protruding above the cap plate 830 may be reduced. The recessed terminal 810 may be in line with (e.g., may be co-planar with), or may slightly protrude from, the cap plate 830. Because the cap plate 830 according to some embodiments of the present disclosure may have a structure in which the terminal 810 may be embedded, the size of the case and the size of the electrodes therein may be increased by an amount of space that may have been previously occupied by the terminal.

Referring to FIG. 8, the terminal 810 may include an engraved recess 814. The recess 814 may be a component for coupling to an insulating plate 840. The insulation plate 840 may be disposed under the cap plate 830. The insulation plate 840 may be provided in a suitable size corresponding to the size of the cap plate 830. The insulation plate 840 may include an embossed protrusion 815. The protrusion 815 of the insulation plate 840 may be provided to correspond to the recess (e.g., the grooves) 814 of the terminal 810. The protrusion 815 of the insulating plate 840 and the recess 814 of the terminal 810 may be engaged with and connected to (e.g., coupled to or attached to) each other. With the engagement and coupling of the protrusion 815 of the insulating plate 840 and the recess 814 of the terminal 810, a fixing force of the cap assembly may be advantageously increased.

In addition, the insulating member 820 and terminal 810 that are connected to (e.g., coupled to or attached to) each other and positioned in the terminal through-hole of the cap plate 830 may be supported by the insulating plate 840 disposed under the cap plate 830.

The terminal 810 may include a rivet terminal 812 that is inserted into a hole provided in the terminal 810. The insulation plate 840 disposed under the cap plate 830 and the terminal 810 may be connected to (e.g., coupled to or attached to) each other by the rivet terminal 812 by riveting, latching or welding the insulation plate 840 and the terminal 810 to each other.

In an embodiment, the conductive member may be provided in a shape that is the same as or substantially the same as (or similar to) that of the insulating member 820 described above, and thus, redundant description thereof may not be repeated.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A cap assembly (230, 300, 500) comprising:
a cap plate (120, 330, 430, 530, 630, 730, 830) coupled to a case (110, 220) having an open top portion, the cap plate (120, 330, 430, 530, 630, 730, 830) having a first terminal (312, 512) through-hole and a second terminal (314, 514) 314 through-hole;
a first terminal (312, 512) and a second terminal (314, 514) located in the first terminal (312, 512) through-hole and the second terminal (314, 514) through-hole, respectively, and electrically connected to an electrode assembly (210) accommodated in the case (110, 220); and
at least one insulating member (320, 420, 520, 620, 720, 820) electrically insulating the cap plate (120, 330, 430, 530, 630, 730, 830) from at least one of the first terminal (312, 512) or the second terminal (314, 514).

2. The cap assembly (230, 300, 500) as claimed in claim 1, further comprising an insulating plate (440, 640, 740, 840) under the cap plate (120, 330, 430, 530, 630, 730, 830).

3. The cap assembly (230, 300, 500) as claimed in claim 2, further comprising a conductive member (322, 522) spacing the cap plate (120, 330, 430, 530, 630, 730, 830) from one of the first terminal (312, 512) or the second terminal (314, 514), and
wherein the first terminal (312, 512) is coupled to the insulating member (320, 420, 520, 620, 720, 820), and is located in the first terminal (312, 512) through-hole, and
wherein the second terminal (314, 514) is coupled to the conductive member (322, 522), and is located in the second terminal (314, 514) through-hole.

4. The cap assembly (230, 300, 500) as claimed in claims 1 to 3, wherein the insulating member (320, 420, 520, 620, 720, 820) has a size corresponding to a size of the first terminal (312, 512) or the second terminal (314, 514), and
wherein a bottom surface of the first terminal (312, 512) or the second terminal (314, 514) is seated on a top surface of the insulating member (320, 420, 520, 620, 720, 820), and is located in the first terminal (312, 512) through-hole or the second terminal (314, 514) through-hole.

5. The cap assembly (230, 300, 500) as claimed in claims 1 to 4, wherein the insulating member (320, 420, 520, 620, 720, 820) has a size corresponding to a size of an inner surface of the first terminal (312, 512) through-hole or the second terminal (314, 514) through-hole, and an inside of the insulating member (320, 420, 520, 620, 720, 820) is perforated.

6. The cap assembly (230, 300, 500) as claimed in claim 5, wherein the first terminal (312, 512) or the second terminal (314, 514) penetrates the insulating member (320, 420, 520, 620, 720, 820).

7. The cap assembly (230, 300, 500) as claimed in claim 5 or 6, wherein an inner surface of the first terminal (312, 512) through-hole or the second terminal (314, 514) through-hole has a sloped surface (622) to support the insulating member (320, 420, 520, 620, 720, 820), and
wherein an outer surface of the insulating member (320, 420, 520, 620, 720, 820) is sloped to correspond to the sloped surface (622).

8. The cap assembly (230, 300, 500) as claimed in claims 5 to 7, wherein an inner surface of the first terminal (312, 512) through-hole or the second terminal (314, 514) through-hole comprises a first stepped portion (722) to support the insulating member (320, 420, 520, 620, 720, 820), and
wherein an outer surface of the insulating member (320, 420, 520, 620, 720, 820) has a second stepped portion (724) corresponding to the first stepped portion (722).

9. The cap assembly (230, 300, 500) as claimed in claims 2 to 8, wherein at least one of the first terminal (312, 512) or the second terminal (314, 514) has an engraved recess (814) for coupling to the insulating plate (440, 640, 740, 840),
wherein the insulating plate (440, 640, 740, 840)comprises an embossed protrusion (815) corresponding to the engraved recess (814) of at least one of the first terminal (312, 512) or the second terminal (314, 514).

10. A secondary battery comprising:
an electrode assembly (210) comprising a first electrode, a second electrode, and a separator;
a case (110, 220) having an open top portion to accommodate the electrode assembly (210); and
a cap assembly (230, 300, 500) covering the open top portion of the case (110, 220),
wherein the cap assembly (230, 300, 500) comprises:
a cap plate (120, 330, 430, 530, 630, 730, 830) coupled to the case (110, 220), and having a first terminal (312, 512) through-hole and a second terminal (314, 514) through-hole;
a first terminal (312, 512) and a second terminal (314, 514) located in the first terminal (312, 512) through-hole and the second terminal (314, 514) through-hole, respectively, and electrically connected to the electrode assembly (210);
an insulating member (320, 420, 520, 620, 720, 820) spacing the first terminal (312, 512) from the cap plate (120, 330, 430, 530, 630, 730, 830); and
a conductive member (322, 522) spacing the second terminal (314, 514) from the cap plate (120, 330, 430, 530, 630, 730, 830).

11. The secondary battery as claimed in claim 10, further comprising an insulating plate (440, 640, 740, 840) under the cap plate (120, 330, 430, 530, 630, 730, 830).

12. The secondary battery as claimed in claim 10 or 11, wherein the first terminal (312, 512) is coupled to the insulating member (320, 420, 520, 620, 720, 820), and is located in the first terminal (312, 512) through-hole, and
wherein the second terminal (314, 514) is coupled to the conductive member (322, 522), and is located in the second terminal (314, 514) through-hole.

13. The secondary battery as claimed in claims 10 to 12, wherein the insulating member (320, 420, 520, 620, 720, 820) has a size corresponding to a size of the first terminal (312, 512), and
wherein a bottom surface of the first terminal (312, 512) is seated on a top surface of the insulating member (320, 420, 520, 620, 720, 820), and is located in the first terminal (312, 512) through-hole.

14. The secondary battery as claimed in claims 10 to 13, wherein the insulating member (320, 420, 520, 620, 720, 820) has a size corresponding to a size of an inner surface of the first terminal (312, 512) through-hole,
wherein an inside of the insulating member (320, 420, 520, 620, 720, 820) is perforated, and
wherein the first terminal (312, 512) is located in the insulating member (320, 420, 520, 620, 720, 820).

15. The secondary battery as claimed in claims 11 to 14, wherein the first terminal (312, 512) comprises an engraved recess (814) for coupling to the insulating plate (440, 640, 740, 840),
wherein the insulating plate (440, 640, 740, 840) comprises an embossed protrusion (815) corresponding to the engraved recess (814) of the first terminal (312, 512).
